Europäisches Patentamt

European Patent Office

Office européen des brevets

(11) Publication number: **0 054 372**
**A1**

## (12) EUROPEAN PATENT APPLICATION

(21) Application number: 81305621.5

(22) Date of filing: 27.11.81

(51) Int. Cl.³: **F 16 D 13/64**

(30) Priority: 16.12.80 GB 8040155

(43) Date of publication of application:
23.06.82 Bulletin 82/25

(84) Designated Contracting States:
AT BE DE FR GB IT NL SE

(71) Applicant: AUTOMOTIVE PRODUCTS LIMITED
Tachbrook Road
Leamington Spa Warwickshire CV31 3ER(GB)

(72) Inventor: Temperley, Harry Davison
1 Avon Road Whitnash
Leamington Spa Warwickshire(GB)

(74) Representative: Farrow, Robert Michael
Patent Department Automotive Products Limited
Tachbrook Road
Leamington Spa Warwickshire CV31 3ER(GB)

(54) Friction clutch driven plate.

(57) An annular friction clutch driven plate having friction facings (12) and (13) presenting friction surfaces (16) in opposite directions, said facings (12) and (13) being spaced axially apart by resilient means comprising a flat annular spring steel plate (17) having a circular array of flat washers (18) fixed thereon and located alternately on one side and the other of the plate, and spacing each side of plate (17) from its respective facing. The gap between adjacent washers on one face allow the plate (17) to distort so that the washers on the other face can move into the gaps.

Fig.1

EP 0 054 372 A1

Croydon Printing Company Ltd.

## "Friction Clutch Driven Plate"

This invention relates to a friction clutch driven plate, and in particular but not exclusively to wet driven plates that operate in oil in automatic transmissions.

In wet clutch driven plates it is usual for opposed friction facings on either side of the clutch plate to be secured back to back onto an annular support plate. Since the facings are usually secured onto the support plate by an adhesive there is effectively no axial cushioning between the opposed facings. Such a construction of driven plate is shown in U.S. Patent 3 897 860.

It is desirable to have said axial cushioning in order to prevent the clutch driven plate from snatching on release of the clutch and subsequent take up of the driven plate between a pair of driven members e.g. a flywheel and pressure plate. However, when some axial resilience is placed in between the opposed facings it is difficult to keep the opposed friction surfaces on the facings parallel as they move axially together.

It is the object of the present invention to provide a driven plate with axial cushioning between the opposed friction facings and which overcomes the above problems.

Accordingly there is provided an annular friction clutch driven plate having friction facings presenting friction surfaces in opposite directions, said facings being spaced axially apart by resilient means comprising a flat annular spring steel plate having a circular array of flat washers fixed thereon and located alternately on one side and the other of the plate and spacing each side of the plate from its adjacent respective friction facing.

Preferably the facings are a pair of annular facings, each mounted on an annular support plate, and the spring steel plate is located axially between said support plates.

The invention will be described by way of example and with reference to the accompanying drawings in which:-

Fig. 1 is a plan view of a driven plate according to this invention showing one quadrant without the friction facings; and

Fig. 2 is a section on the line A-A of Fig. 1.

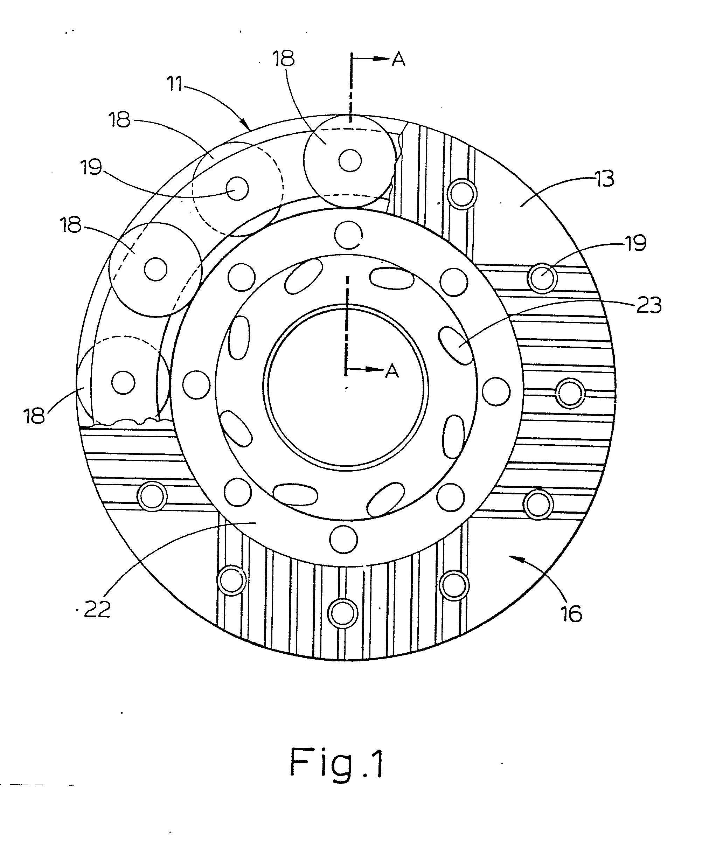

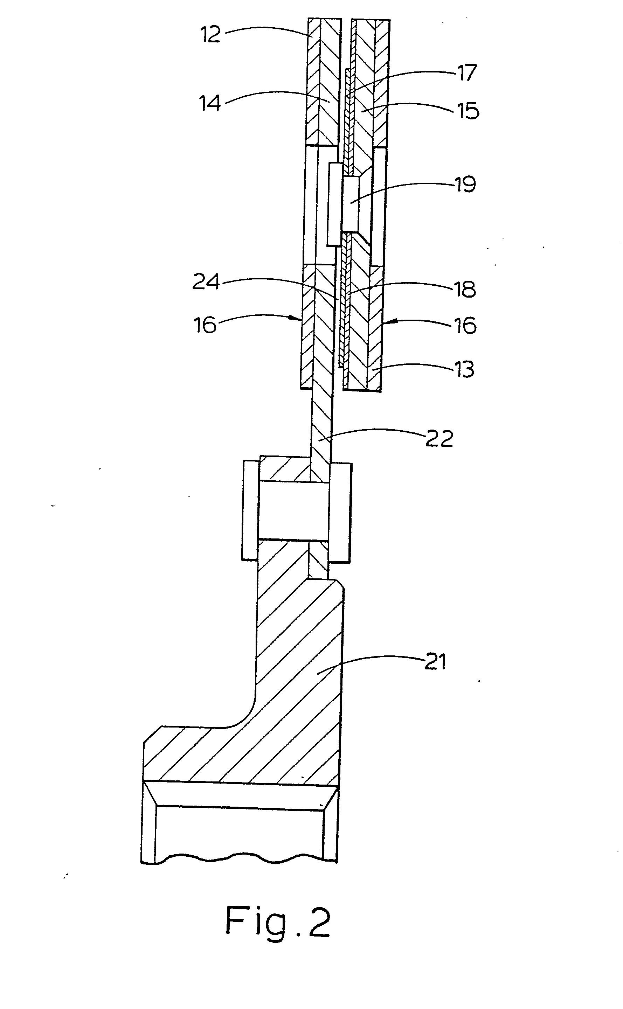

With reference to Figs. 1 and 2, the driven plate 11 is a wet clutch driven plate for use in an automatic transmission of a motor vehicle. The driven plate comprises a pair of co-axial annular. friction facings 12 and 13 each of which is fixed by adhesive onto a respective annular support plate 14 or 15, respectively. The facings 12 and 13 present friction surfaces 16 facing in opposite directions and these friction surfaces 16 are grooved for the transfer of oil across said surface 16.

The two facings 12 and 13 are spaced axially apart by resilient means comprising a flat co-axial annular spring steel plate 17 of a lesser radially width than the facing and having a circular array of flat washers 18 secured thereon by rivets 19. The washers 18 are located alternately on one side and the other of the spring steel plate 17 as they are spaced circumferentially around the facings 12 and 13. The washers 11 each have a diameter substantially equal to the radial width of the facings 12 and 13. The rivets 19 that secure each of the washers 18 onto the spring plate 17 are also utilised for securing the adjacent support plate 14 or 15 to the spring plate 17.

The support plate 14 has a radially inward extension 22 for securing the friction facings to the flange of a central co-axial hub 21. The hub 21 is internally splined for securing the driven plate 11 to a gearbox shaft (not shown). The flange of the hub 21 has a number of spaced holes 23 therein for the passage of oil from one side of the driven plate to the other.

The spaced washers 18 located between the support plate 14 and the spring plate 17 cause circumferentially spaced gaps 24 between the support plate 14 and the spring plate 17 due to the spaces between adjacent washers on that side of the plate. Similarly the washers 18 also cause there to be spaced gaps between the support plate 15 and the plate 17, which alternate with the gaps on the other side of the plate 17, in a similar manner to the washers 18.

When the driven plate 17 is utilised in a clutch the driven plate is taken up to be clamped between a flywheel and a pressure plate (neither shown) when the clamp load is applied to the oppositely directed surfaces 16. The two facings 12 and 13 can move axially together because the spring steel plate 17 can distort allowing the washers 18 on one side of the plate 17 to move into the gaps 24 on the other side of the plate, thus allowing two support plates to move axially together. Each facing 12 or 13 has holes therein that align with the rivets 19 on the spring plate 17 allowing the plate 17 to distort towards the respective facing 12 and 13 with interference of the rivets against the facing material.

When the driven plate is clamped between the pressure plate and flywheel the plate 17 becomes corrugated with the corrugations winding through the opposite sides of adjacent washers.

0054372

Claims

1.      An annular friction clutch driven plate having friction facings (12) and (13) presenting friction surfaces (16) in opposite directions, said facings being spaced axially apart by resilient means (17) and (18) characterised in that the resilient means comprises a flat annular spring steel plate (17) having a circular array of flat washers (18) fixed thereon and located alternately on one side and the other of the plate (17) and spacing each side of said plate (17) from its adjacent respective friction facing.

2.      A driven plate as claimed in Claim 1, characterised in that the friction facings (17) are a pair of annular friction facings presenting annular friction surfaces (18) in opposite directions.

3.      A driven plate as claimed in Claim 1 or Claim 2, characterised in that the friction facings (12 and (13) are each mounted on an annular support plate (14) and (15) respectively and the spring steel plate (17) and associated washers (18) are located axially between the support plates (14) and (15).

4.     A driven plate as claimed in Claim 3, characterised in that one of said support plates (14) is connected directly to a central hub (21).

Fig.1

0054372

Fig.2

## European Patent Office

## EUROPEAN SEARCH REPORT

### DOCUMENTS CONSIDERED TO BE RELEVANT

| Category | Citation of document with indication, where appropriate, of relevant passages | Relevant to claim |
|---|---|---|
| A | GB - A - 443 608 (NEWTON)  * the whole document * | 1-4 |
| A | GB - A - 533 897 (G.M.) | |
| A | GB - A - 542 578 (WELLMAN) | |
| A | GB - A - 858 316 (FICHTEL) | |
| A | US - A - 1 479 973 (STURT) | |
| A | US - A - 2 027 650 (NUTT) | |
| A | US - A - 2 524 147 (THELANDER) | |
| A | US - A - 2 658 598 (THELANDER) | |
| A | US - A - 2 799 603 (WELLMAN) | |
| A | US - A - 2 986 253 (BRANTINGHAM) | |
| A | DE - C - 900 302 (DAIMLER) | |

**CLASSIFICATION OF THE APPLICATION (Int. Cl. 3)**

F 16 D 13/64

**TECHNICAL FIELDS SEARCHED (Int.Cl. 3)**

F 16 D

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| The Hague | 11-03-1982 | ORTHLIEB |

EPO Form 1503.1 06.78